# EUROPEAN PATENT SPECIFICATION

(11) **EP 4 358 311 B1**
(45) Date of publication and mention of the grant of the patent: **14.10.2026**
(21) Application number: 23204477.6
(22) Date of filing: 18.10.2023
(51) Int. Cl.: H01R 9/05, H01R 13/506, H01R 13/6593, H01R 13/6597

(54) **CONNECTOR HAVING SHIELD STRUCTURE**
VERBINDER MIT ABSCHIRMSTRUKTUR
CONNECTEUR AYANT UNE STRUCTURE DE BLINDAGE

(30) Priority: 19.10.2022 KR 20220135023; 20.09.2023 KR 20230125631
(43) Date of publication of application: 24.04.2024
(73) Proprietor: Tyco Electronics AMP Korea Co., Ltd., Gyeongsan 712837 (KR)
(72) Inventor: Yeo, Jin Hwan, 712-838 Gyeongsan-Si (KR); Park, Young-Geun, 712-838 Gyeongsan-Si (KR); Jang, Suck Ho, 712-838 Gyeongsan-Si (KR)
(74) Representative: Ashton, Gareth Mark

(56) References cited:
- EP-A1- 3 869 632
- WO-A1-2021/241147

## Description

### BACKGROUND

### Field of the Invention

The present disclosure relates to a connector having a shield structure.

### Description of the Related Art

A connector is a type of component that selectively allows or disallows electrical connection. For example, an automobile is provided with many electrical components such as electronic components or sensors, and these electrical components are electrically connected to other electrical components or a power supply through connectors. EP3869632A1, which constitutes the closest prior art to the invention, discloses a connector for an electric vehicle comprising a two-part housing, a contact carrier that is connected to the housing, two power lines that extend into the housing and are electrically connected to contacts held in the contact carrier, and a connecting element that extends between the power lines and electrically connects braid shields of the power lines. WO2021241147A1 discloses a ferrule for connecting to an end of an electrical cable.

### SUMMARY

An embodiment provides a connector having a shield structure.

According to claim 1, there is provided a connector including a housing, an outer case connected to the housing, an inner case disposed between the housing and the outer case, a shield structure surrounding at least a portion of the inner case, a first cable including a first line configured to transmit alternating current, a first inner cover surrounding the first line, and a first cable shield surrounding the first inner cover and connected to the shield structure, a second cable including a second line configured to transmit direct current, a second inner cover surrounding the second line, and a second cable shield surrounding the second inner cover and connected to the shield structure, a ground terminal connected to the housing, in contact with the shield structure, and configured to electrically connect the first cable shield and the second cable shield to a first ground, and a ground cable connected to the ground terminal and configured to electrically connect the first cable shield and the second cable shield to a second ground.

The shield structure may include a shield shell base surrounding at least a portion of the inner case, and a shield shell body connected to the shield shell base.

The shield shell base may include a base frame and a base frame arm extending from the base frame, and the shield shell body may include a body frame and a plurality of body frame arms extending from the body frame and connected to the base frame arm.

The outer case may include an outer case body connected to the housing, a first cable accommodating part formed through the outer case body and configured to accommodate the first cable, a second cable accommodating part formed to protrude from the outer case body and configured to accommodate the second cable, and a ground terminal accommodating part formed through the outer case body and configured to accommodate the ground terminal.

A size of the second cable accommodating part may be greater than a size of the first cable accommodating part.

The first cable accommodating part and the second cable accommodating part may each be provided in plurality.

The ground terminal accommodating part may be provided between the first cable accommodating part and the second cable accommodating part.

The connector may further include a first ferrule configured to connect the first cable shield and the shield structure.

The shield structure may include a shield frame surrounding at least a portion of the inner case, and a shield frame arm extending from the shield frame and connected to the first ferrule.

The first ferrule may include a first inner ferrule connected to the first cable shield, and a first outer ferrule surrounding the first inner ferrule and connected to the shield structure and the first cable shield.

The first outer ferrule may include a first outer ferrule base with an inner surface connected to the first cable shield, a first outer ferrule head with an outer surface connected to the shield structure and an inner surface connected to the first inner cover, and a first outer ferrule body configured to connect the first outer ferrule base and the first outer ferrule head, and having an inclined surface.

The connector may further include a second ferrule configured to connect the second cable shield and the shield structure.

The shield structure may include a shield frame surrounding at least a portion of the inner case, and a shield frame arm extending from the shield frame and connected to the second ferrule.

The second ferrule may include a second inner ferrule connected to the second cable shield, and a second outer ferrule surrounding the second inner ferrule and connected to the shield structure and the second cable shield.

The second outer ferrule may include a second outer ferrule base with an inner surface connected to the second cable shield, a second outer ferrule head with an inner surface connected to the shield structure, and a second outer ferrule body configured to connect the second outer ferrule base and the second outer ferrule head, and having an inclined surface.

The first ground may be an earth ground, and the second ground may be a chassis ground.

According to a non-claimed aspect, there is provided a connector including a housing, an outer case connected to the housing, an inner case disposed between the housing and the outer case, a shield shell base surrounding at least a portion of the inner case, and provided to be electrically connected to a shield of a first cable, a shield shell body connected to the shield shell base and provided to be electrically connected to a shield of a second cable, and a ground terminal connected to the housing, in contact with the shield shell base, and configured to electrically connect each of the shield shell base and the shield shell body to two grounds.

Additional aspects of embodiments will be set forth in part in the description which follows and, in part, will be apparent from the description, or may be learned by practice of the disclosure.

According to an embodiment, the design of a connector may be simplified. The design and components of a charging inlet for shield configuration may be simplified. The manufacturing process of a connector may be optimized. The wiring components and processes for shield configuration may be simplified. In manufacturing a connector, productivity may improve, and quality may improve. Implementing an earth ground and a chassis ground through a direct fastening structure may improve shield performance. Manual wiring work related to shield configuration is reduced, and thus, quality risk may be reduced.

### BRIEF DESCRIPTION OF THE DRAWINGS

These and/or other aspects, features, and advantages of the invention will become apparent and more readily appreciated from the following description of embodiments, taken in conjunction with the accompanying drawings of which:
FIG. 1 is a perspective view of a connector according to an embodiment;
FIG. 2 is an exploded perspective view of a connector according to an embodiment;
FIG. 3 is a view schematically illustrating a shield structure of a connector electrically connected to an earth ground and a chassis ground according to an embodiment;
FIG. 4 is an enlarged cross-sectional perspective view of a portion of a connector according to an embodiment;
FIG. 5 is an enlarged cross-sectional view of a portion of a connector according to an embodiment;
FIG. 6 is an enlarged cross-sectional perspective view of a portion of a connector according to an embodiment;
FIG. 7 is an enlarged cross-sectional view of a portion of a connector according to an embodiment;
FIG. 8 is an enlarged cross-sectional perspective view of a portion of a connector according to an embodiment;
FIG. 9 is an exploded perspective view schematically illustrating a plurality of cables and lines according to an embodiment;
FIG. 10 is a perspective view of a shield shell base according to an embodiment;
FIG. 11 is a plan view of a shield shell base yet to be completed according to an embodiment;
FIG. 12 is a perspective view of a shield shell body according to an embodiment;
FIG. 13 is a plan view of a shield shell body yet to be completed according to an embodiment; and
FIG. 14 is a cross-sectional view illustrating a third base frame arm and a first body frame arm being connected according to an embodiment.

### DETAILED DESCRIPTION

Hereinafter, embodiments are described in detail with reference to the accompanying drawings. The following description describes one of several aspects of the embodiments, and the following description forms part of the detailed description of the embodiments. In the description of an embodiment, any detailed description of a well-known function or configuration is not included to clearly convey the gist of the present disclosure.

However, various alterations and modifications may be made to the embodiments. Thus, the embodiments are not meant to be limited by the descriptions of the present disclosure. The embodiments should be understood to include all changes, equivalents, and replacements within the idea and the technical scope of the disclosure.

In addition, the terms or words used to describe the present disclosure and claims should not be construed in a conventional or dictionary meaning, and based on a principle that the inventor may properly define the concept of terms in order to best describe their invention, the terms or words should be construed as having meanings and concepts consistent with the technical idea of the disclosure according to an embodiment.

The singular forms "a," "an," and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which the embodiments belong. Terms defined in dictionaries generally used should be construed as having meanings matching contextual meanings in the related art and are not to be construed as having an ideal or excessively formal meaning unless otherwise defined herein.

When describing the embodiments with reference to the accompanying drawings, like reference numerals refer to like constituent elements and a repeated description related thereto will be omitted. In the description of example embodiments, detailed description of well-known related structures or functions will be omitted when it is deemed that such description will cause ambiguous interpretation of the present disclosure.

Also, in the description of the components, terms such as first, second, A, B, (a), (b) or the like may be used herein when describing components of the present disclosure. These terms are used only for the purpose of discriminating one constituent element from another constituent element, and the nature, the sequences, or the orders of the constituent elements are not limited by the terms. When one constituent element is described as being "connected", "coupled", or "attached" to another constituent element, it should be understood that one constituent element can be connected or attached directly to another constituent element, and an intervening constituent element can also be "connected", "coupled", or "attached" to the constituent elements.

The constituent element, which has the same common function as the constituent element included in any one embodiment, will be described by using the same name in other embodiments. Unless disclosed to the contrary, the configuration disclosed in any one embodiment may be applied to other embodiments, and the specific description of the repeated configuration will be omitted.

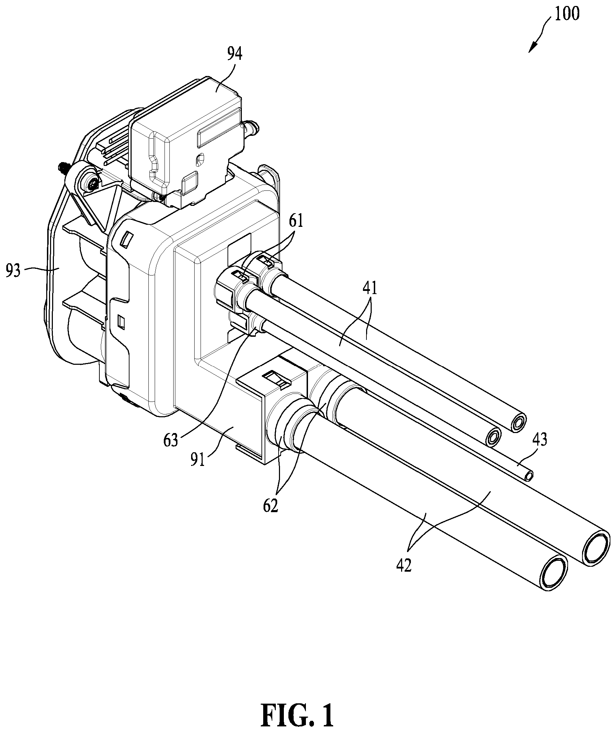

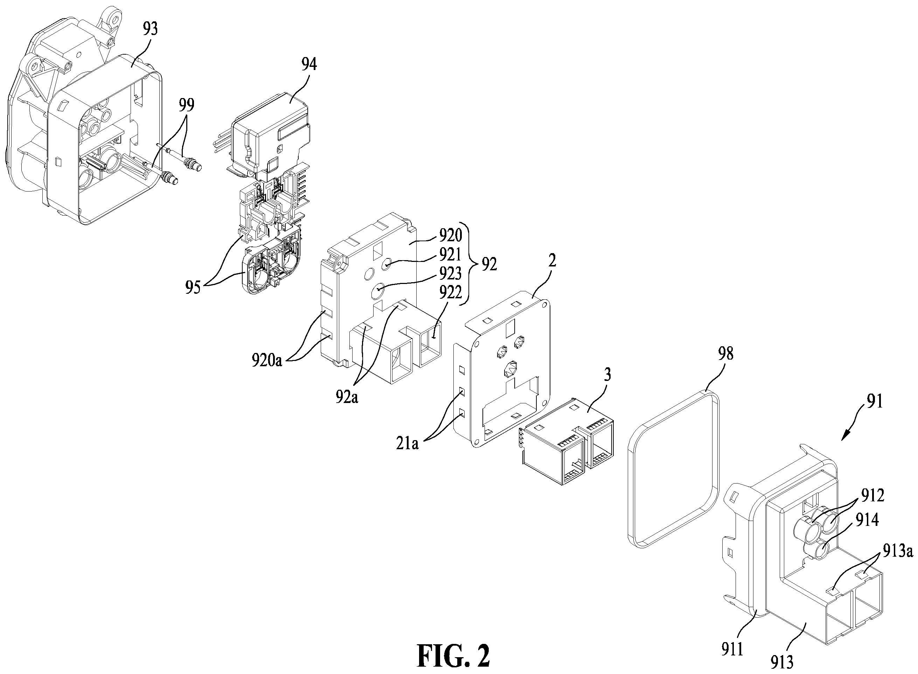

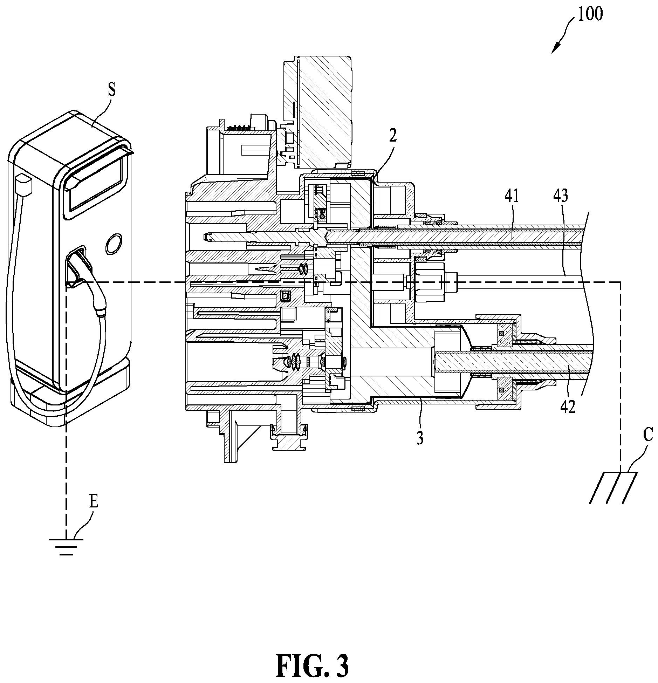

FIG. 1 is a perspective view of a connector according to an embodiment. FIG. 2 is an exploded perspective view of the connector according to an embodiment. FIG. 3 is a view schematically illustrating a shield structure of the connector electrically connected to an earth ground and a chassis ground according to an embodiment.

Referring to FIGS. 1 to 3, a connector 100 having a shield structure (hereinafter, referred to as the connector) may shield a plurality of cables. Here, shielding refers to blocking noise so that signals may be transmitted stably. The connector 100 may simultaneously shield the plurality of cables. The plurality of cables may include different types of cables. A portion of the plurality of cables may transmit alternating current (AC), and the other portion thereof may transmit direct current (DC). Any one of the plurality of cables may be connected to a ground. Respective shield portions of the plurality of cables may be electrically connected to each other and electrically to the ground.

The connector 100 may include an outer case 91, an inner case 92, a housing 93, an outer electronic component 94, an inner electronic component 95, an O-ring 98, a first terminal 99, a shield shell base 2, a shield shell body 3, a first cable 41, a second cable 42, a ground cable 43, a first cable clamp 61, a second cable clamp 62, and a ground cable clamp 63. The inner case 92 may include a case groove 92a recessed from the surface thereof.

The outer case 91 may form a portion of the exterior of the connector 100. The outer case 91 may include a fixing portion to which a plurality of clamps 61, 62, and 63 are fixed. The outer case 91 may include an outer case body 911, a first cable accommodating part 912, a second cable accommodating part 913, and a ground terminal accommodating part 914. The outer case body 911 may be detachably coupled to the housing 93. The outer case body 911 may be detachable from the housing 93. The first cable accommodating part 912 may protrude from the outer case body 911. The first cable accommodating part 912 may include a hole for accommodating the first cable 41. The second cable accommodating part 913 may protrude from the outer case body 911. The second cable accommodating part 913 may include a hole for accommodating the second cable 42. The respective holes in the first cable accommodating part 912 and the second cable accommodating part 913 may be different in size. For example, the size of the hole in the second cable accommodating part 913 may be larger than the size of the hole in the first cable accommodating part 912. The ground cable accommodating part 914 may protrude from the outer case body 911. The ground cable accommodating part 914 may accommodate the ground cable 43. The second cable accommodating part 913 may include a protrusion 913a.

The inner case 92 may be provided between the outer case 91 and the housing 93. The inner case 92 may include a hollow for accommodating the plurality of electronic components 94 and 95. The inner case 92 may include an inner case body 920, a first case hole 921, a second case hole 922, and a ground case hole 923. The inner case body 920 may support the shield shell base 2. The inner case body 920 may include a groove 920a for supporting an arm 21a of the shield shell base 2. The arm 21a will be described in detail later. The arm 21a may be referred to as a first base frame arm. The arm 21a of the shield shell base 2 may be connected in close contact with the groove of the inner case body 920. The first case hole 921 may be formed through the inner case body 920. The first case hole 921 may communicate with the hole in the first cable accommodating part 912. The second case hole 922 may be formed through the inner case body 920. The second case hole 922 may communicate with the hole in the second cable accommodating part 911. The ground case hole 923 may be formed through the inner case body 920. The ground case hole 923 may communicate with the hole in the ground cable accommodating part 914.

The housing 93 may accommodate the inner case 92 and be connected to the outer case 91. The housing 93 may be connected to a charging station, for example.

The outer electronic component 94 may be connected to the housing 93.

The inner electronic component 95 may be provided in an accommodation space between the inner case 92 and the housing 93.

The O-Ring 98 may be provided inside the outer case 91. The O-ring 98 may reduce or block the unintentional introduction of water or foreign substances from the outside into the outer case 91.

The first terminal 99 may be connected to the first cable 41.

The shield shell base 2 may surround at least a portion of the inner case 92. The shield shell base 2 may include a plurality of holes that overlap the hole in the first cable accommodating part 912 and the hole in the ground cable accommodating part 914.

The shield shell body 3 may be connected to the shield shell base 2. The shield shell body 3 may be surrounded by the second cable accommodating part 913. It should be noted that in this specification, the shield shell base 2 and the shield shell body 3 may be referred to as a shield structure.

The first cable 41 may transmit AC. The first cable 41 may include a cable shield. The cable shield of the first cable 41 may be connected to the shield shell base 2. A plurality of first cables 41 may be provided.

The second cable 42 may transmit DC. The second cable 42 may include a cable shield. The cable shield of the second cable 42 may be connected to the shield shell body 3. The cable shield of the second cable 42 may be electrically connected to the cable shield of the first cable 41 through the shield shell base 2 and the shield shell body 3.

The ground cable 43 may be connected to the ground. The ground cable 43 may electrically connect the cable shield of the first cable 41 and the cable shield of the second cable 42 through the shield shell base 2 and the shield shell body 3.

The first cable clamp 61 may secure the first cable 41 to the outer case 91. The first cable clamp 61 may be provided to be fixed to the first cable 41 and detachable from the outer case 91. The first cable clamp 61 may be connected to the first cable accommodating part 912. The first cable clamp 61 may include an arm structure that may elastically deform and may be caught by the first cable accommodating part 912.

The second cable clamp 62 may secure the second cable 42 to the outer case 91. The second cable clamp 62 may be provided to be fixed to the second cable 42 and detachable from the outer case 91. The second cable clamp 62 may be connected to the second cable accommodating part 913. The second cable clamp 62 may include an arm structure that may elastically deform and may be caught by the second cable accommodating part 913.

The ground cable clamp 63 may secure the ground cable 43 to the outer case 91. The ground cable clamp 63 may be provided to be fixed to the ground cable 43 and detachable from the outer case 91. The ground cable clamp 63 may be connected to the ground cable accommodating part 914. The ground cable clamp 63 may include an arm structure that may elastically deform and may be caught by the ground cable accommodating part 914.

The connector 100 may electrically connect the first cable 41, the second cable 42, and the ground cable 43 through the shield shell base 2 and the shield shell body 3. The connector 100 may connect the shield of each of the first cable 41, the second cable 42, and the ground cable 43 to the ground through the ground cable 43 connected to a plurality of grounds C and E. The connector 100 may be connected to the charging station S. The plurality of grounds C and E may include a chassis ground C and an earth ground E.

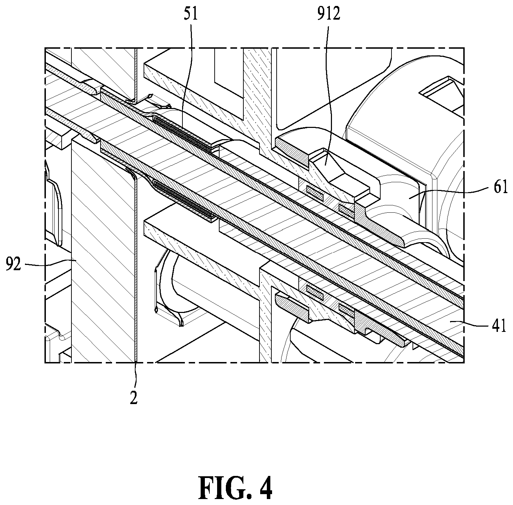

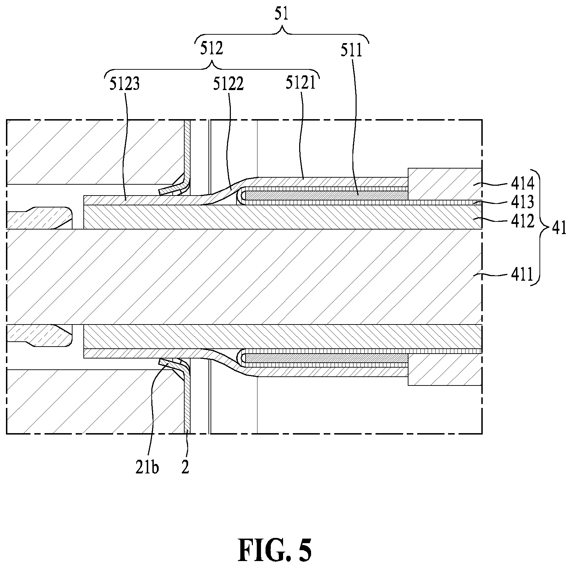

FIG. 4 is an enlarged cross-sectional perspective view of a portion of a connector according to an embodiment. FIG. 5 is an enlarged cross-sectional view of a portion of the connector according to an embodiment.

Referring to FIGS. 4 and 5, the first cable 41 may be connected to the first cable accommodating part 912 through the first cable clamp 61. For example, the first cable clamp 61 may be attached to the first cable 41. The first cable clamp 61 may be detachable from the first cable accommodating part 912. The first cable clamp 61 may include a hole for accommodating at least a portion of the first cable accommodating part 912. At least a portion of the first cable accommodating part 912 may have a protrusion.

The first cable 41 may include a first line 411 for transmitting AC, a first inner cover 412 surrounding the first line 411, a first cable shield 413 provided to surround the first inner cover 412 and block noise, and a first outer cover 414 surrounding the first cable shield 413. An end portion of the first cable shield 413 may have a shape rolled outward. The end portion of the first cable shield 413 may have a U-shaped cross section. A first inner ferrule 511, which will be described later, may be inserted into the end portion of the first cable shield 413.

A first ferrule 51 may be connected to the first cable 41 and may connect the shield of the first cable 41 to the shield shell base 2. The first ferrule 51 may be physically and electrically connected to the shield shell base 2. The shield shell base 2 may surround the inner case 92. The first ferrule 51 may include the first inner ferrule 511 and a first outer ferrule 512. The first ferrule 51 may be connected to a second base frame arm 21b. The second base frame arm 21b will be described later.

The first inner ferrule 511 may be connected to the first cable shield 413. The first inner ferrule 511 may have a ring shape. At least two surfaces of the first inner ferrule 511 may be provided in contact with the first cable shield 413.

The first outer ferrule 512 may surround the first inner ferrule 511 and may be connected to the shield shell base 2 and the first cable shield 413. The first outer ferrule 512 may include a first outer ferrule base 5121 with an inner surface connected to the first cable shield 413, a first outer ferrule head 5123 with an outer surface connected to the shield shell base 2 and an inner surface connected to the first inner cover 412, and a first outer ferrule body 5122 connecting the first outer ferrule base 5121 and the first outer ferrule head 5123. The first outer ferrule body 5122 may include an inclined surface. The first outer ferrule body 5122 may have a shape that gradually narrows from the first outer ferrule base 5121 toward the first outer ferrule head 5123.

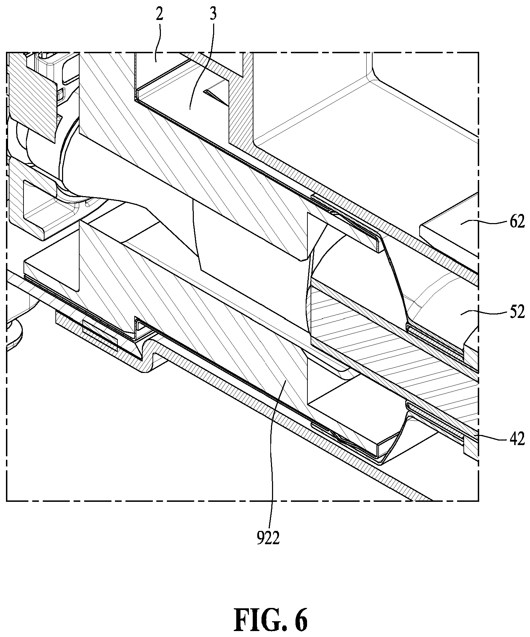

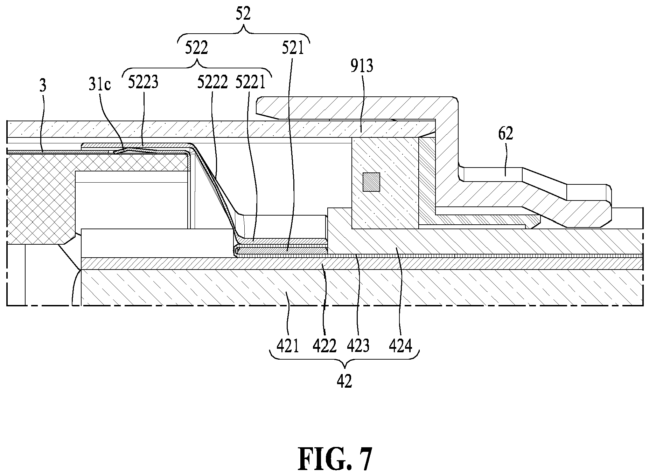

FIG. 6 is an enlarged cross-sectional perspective view of a portion of a connector according to an embodiment. FIG. 7 is an enlarged cross-sectional view of a portion of the connector according to an embodiment.

Referring to FIGS. 6 and 7, the second cable 42 may be connected to the second cable accommodating part 913 through the second cable clamp 62. For example, the second cable clamp 62 may be attached to the second cable 42. The second cable clamp 62 may be detachable from the second cable accommodating part 913. The second cable clamp 62 may include a hole for accommodating at least a portion of the second cable accommodating part 913. At least a portion of the second cable accommodating part 913 may have the protrusion 913a (see FIG. 2).

The second cable 42 may include a second line 421 for transmitting DC, a second inner cover 422 surrounding the second line 421, a second cable shield 423 provided to surround the second inner cover 422 and block noise, and a second outer cover 424 surrounding the second cable shield 423. The second line 421 may be formed to be larger than the first line 411. The second line 421 may transmit current of a relatively high intensity compared to the first line 411. An end portion of the second cable shield 423 may have a shape rolled outward. The end portion of the second cable shield 423 may have a U-shaped cross section. A second inner ferrule 521, which will be described later, may be inserted into the end portion of the second cable shield 423.

A second ferrule 52 may be connected to the second cable 42 and may connect the shield of the second cable 42 to the shield shell body 3. The second ferrule 52 may be physically and electrically connected to the shield shell body 3. The second ferrule 52 may include a second inner ferrule 521 and a second outer ferrule 522. The second ferrule 52 may be in contact with a third body frame arm 31c provided on the shield shell body 3. The third body frame arm 31c will be described later.

The second inner ferrule 521 may be connected to the second cable shield 423. The second inner ferrule 521 may have a ring shape. At least two surfaces of the second inner ferrule 521 may be provided in contact with the second cable shield 423.

The second outer ferrule 522 may surround the second inner ferrule 521 and may be connected to the shield shell body 3 and the second cable shield 423. The second outer ferrule 522 may include a second outer ferrule base 5221 with an inner surface connected to the second cable shield 423, a second outer ferrule head 5223 with an inner surface connected to the shield shell body 3, and a second outer ferrule body 5222 connecting the second outer ferrule base 5221 and the second outer ferrule head 5223. The second outer ferrule body 5222 may include an inclined surface. The second outer ferrule body 5222 may have a shape that gradually narrows from the second outer ferrule base 5221 toward the second outer ferrule head 5223.

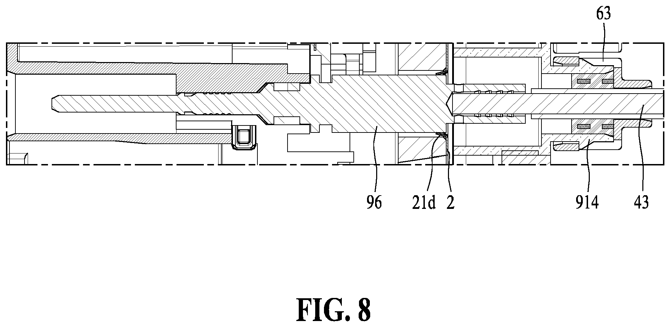

FIG. 8 is an enlarged cross-sectional perspective view of a portion of a connector according to an embodiment.

Referring to FIG. 8, the ground cable 43 may be connected to the ground cable accommodating part 914 through the ground cable clamp 63. For example, the ground cable clamp 63 may be attached to the ground cable 43. An end portion of the ground cable 43 may be accommodated in the ground terminal 96. The ground terminal 96 may be provided in contact with the shield shell base 2. The ground terminal 96 may be connected to a fourth base frame arm 21d. The fourth base frame arm 21d will be described later.

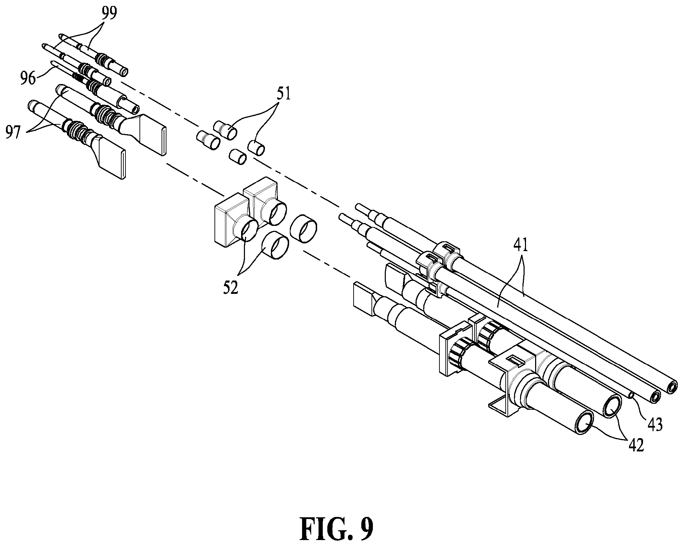

FIG. 9 is an exploded perspective view schematically illustrating a plurality of cables and lines according to an embodiment.

Referring to FIG. 9, the first cable 41 may be connected to the shield structure through the first ferrule 51. The first cable 41 may be connected to the first terminal 99. The first terminal 99 may be connected to the housing (see FIG. 1). The second cable 42 may be connected to the shield structure through the second ferrule 52. The second cable 42 may be connected to the second terminal 97. The second terminal 97 may be connected to the housing (see FIG. 1). The ground cable 43 may be connected to the ground terminal 96.

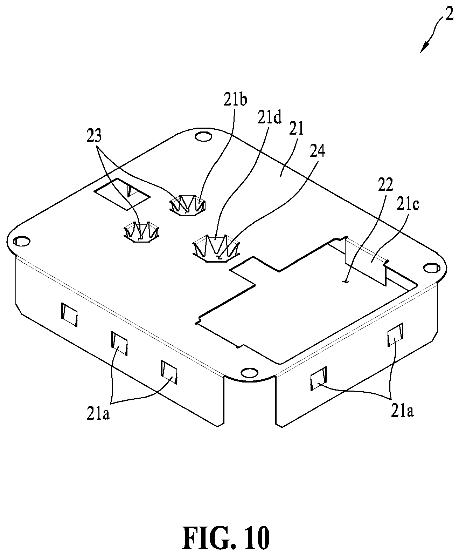

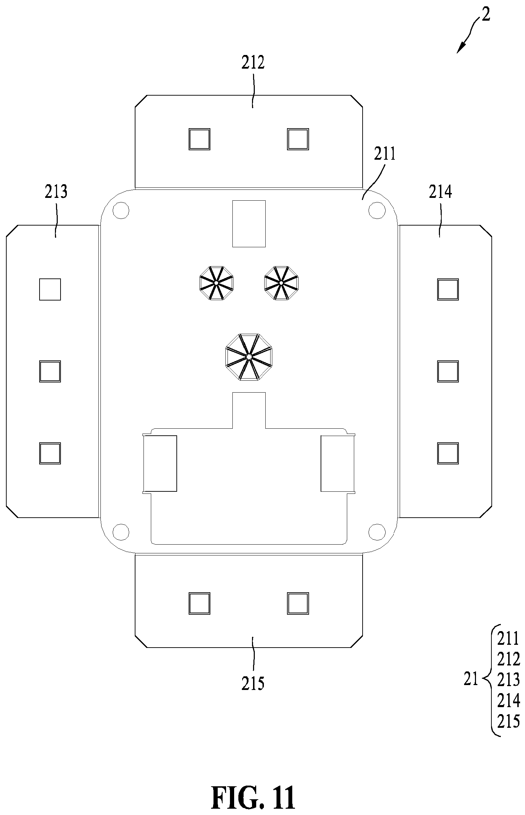

FIG. 10 is a perspective view of a shield shell base according to an embodiment. FIG. 11 is a plan view of the shield shell base yet to be completed according to an embodiment.

Referring to FIGS. 10 and 11, the shield shell base 2 may include a base frame 21, a base main hole 22, a base cable hole 23, and a base ground hole 24. The base frame 21 may form the exterior of the shield shell base 2. The base main hole 22 may be formed through the base frame 21 and may accommodate at least a portion of the shield shell body. The base cable hole 23 may be formed through the base frame 21 and may accommodate the first cable. The base ground hole 24 may be formed through the base frame 21 and may accommodate the ground cable. It should be noted that in this specification, the base frame may be referred to as the shield frame.

The base frame 21 may be manufactured by folding several portions of a plate and forming holes therein. For example, the base frame 21 may include a plurality of planar parts. The plurality of planar parts may include a first base part 211, and a second base part 212, a third base part 213, a fourth base part 214, and a fifth base part 215 that are connected to the first base part 211. Each of the second to fifth base parts 212, 213, 214, and 215 may be formed to be inclined with respect to the first base part 211.

The base frame 21 may include a plurality of base frame arms 21a, 21b, 21c, and 21d. The plurality of base frame arms 21a, 21b, 21c, and 21d may include the first base frame arm 21a, the second base frame arm 21b, a third base frame arm 21c, and the fourth base frame arm 21d. The first base frame arm 21a may be formed on at least one of the second base part 212, the third base part 213, the fourth base part 214, and the fifth base part 215. For example, the first base frame arm 21a may extend inward from at least one of the second base part 212, the third base part 213, the fourth base part 214, and the fifth base part 215. The second base frame arm 21b may be provided on an edge portion of the base cable hole 23 and may be in contact with the first cable shield. The third base frame arm 21c may be provided on an edge portion of the base main hole 22 and may be in contact with the shield shell body. The fourth base frame arm 21d may be provided on an edge portion of the base ground hole 24 and may be in contact with the ground terminal. It should be noted that in this specification, the base frame arm may be referred to as a shield frame arm.

The first base frame arm 21a may be connected to an outer surface of the inner case (see FIG. 2). The second base frame arm 21b may extend from the base frame 21. The second base frame arm 21b may be connected to the first ferrule 51 (see FIG. 5). The third base frame arm 21c may extend from the base frame 21. The third base frame arm 21c may be in contact with a first body frame arm 31a, which will be described later. The fourth base frame arm 21d may be connected to the ground terminal 96 (see FIG. 8).

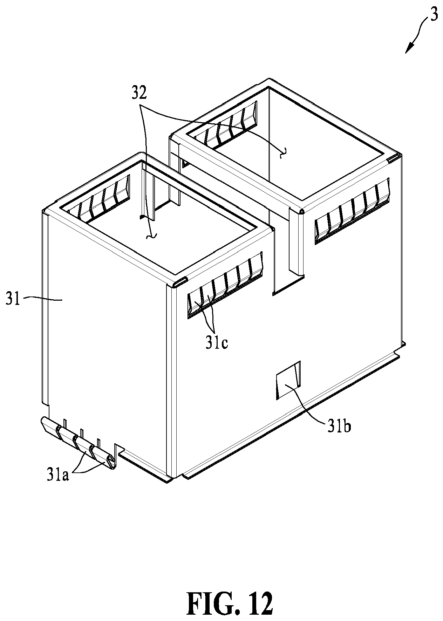

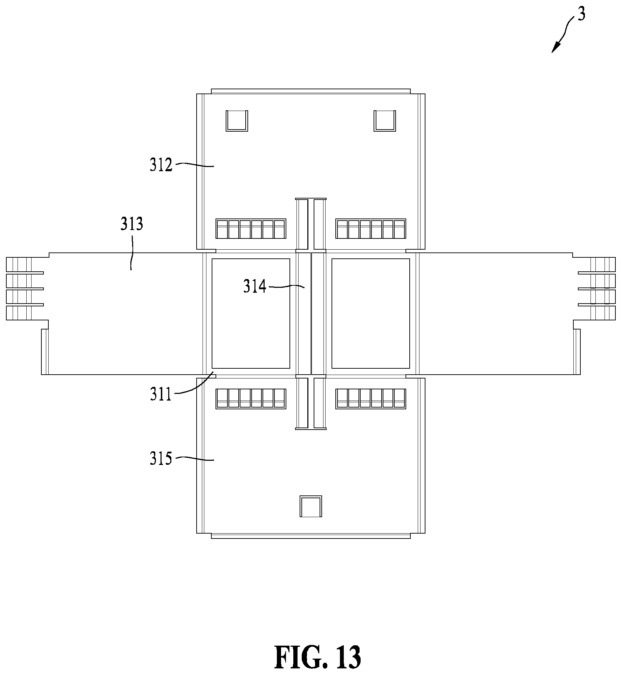

FIG. 12 is a perspective view of a shield shell body according to an embodiment. FIG. 13 is a plan view of the shield shell body yet to be completed according to an embodiment.

Referring to FIGS. 12 and 13, the shield shell body 3 may be manufactured by folding several portions of a plate and forming holes therein. For example, the shield shell body 3 may include a plurality of planar parts. The plurality of flat parts may include a first body part 311, and a second body part 312, a third body part 313, a fourth body part 314, and a fifth body part 315 that are connected to the first body part 311. Each of the second to fifth body parts 312, 313, 314, and 315 may be formed to be inclined with respect to the first body part 311.

The shield shell body 3 may include a body frame 31 and a body hole 32 formed on one side of the body frame 31. The body hole 32 may accommodate the second cable. The body frame 31 may include a plurality of body frame arms 31a, 31b, and 31c. The plurality of body frame arms 31a, 31b, and 31c may include the first body frame arm 31a, a second body frame arm 31b, and the third body frame arm 31c. The first body frame arm 31a may be in contact with the shield shell base. The second body frame arm 31b may be in contact with the case groove 92a (see FIG. 2) provided in the inner case 92. The third body frame arm 31c may be in contact with the second ferrule. It should be noted that in this specification, the body frame may be referred to as a shield frame. It should be noted that in this specification, the body frame arm may be referred to as a shield frame arm.

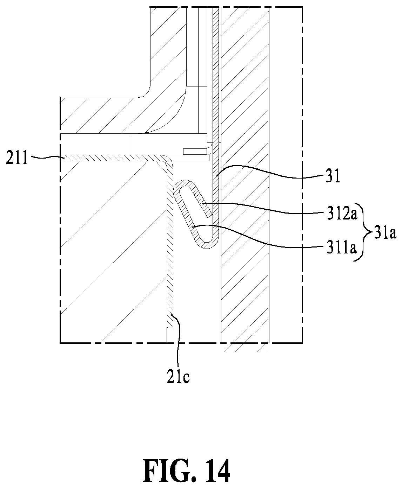

FIG. 14 is a cross-sectional view illustrating a third base frame arm and a first body frame arm being connected according to an embodiment.

Referring to FIG. 14, the third base frame arm 21c may extend from the first base part 211. The third base frame arm 21c and the first base part 211 may form an angle of approximately 90 degrees. The body frame 31 may include the first body frame arm 31a extending from a side portion thereof. The first body frame arm 31a may include a first arm part 311a bending outward from a side portion of the body frame 31 and extending, and a second arm part 312a bending back inward and extending.

Embodiments have been described above with reference to specific matters such as specific components and limited embodiments and with reference to drawings, but these are provided to facilitate overall understanding. Accordingly, the scope of the present disclosure is defined not by the detailed description, but by the claims, and all variations within the scope of the claims are to be construed as being included in the disclosure.

References in the description and claims to arms may be considered to be references to arms, catches or detents any of which may be resilient. References in the description and claims to a line may be considered to be references to a conductor or conductive core. References in the description and claims to being caught may be considered to be references to being engaged.

## Claims

1. A connector (100) having a shield structure (2,3), the connector (100) comprising:
a housing (93);
an outer case (91) connected to the housing (93);
an inner case (92) disposed between the housing (93) and the outer case (91);
the shield structure (2,3) surrounding at least a portion of the inner case (92);
a first cable (41) comprising a first line (411) configured to transmit alternating current, a first inner cover (412) surrounding the first line (411), and a first cable shield (413) surrounding the first inner cover (412) and connected to the shield structure (2,3);
a second cable (42) comprising a second line (421) configured to transmit direct current, a second inner cover (422) surrounding the second line (421), and a second cable shield (423) surrounding the second inner cover (422) and connected to the shield structure (2,3);
a ground terminal (96) connected to the housing (93), in contact with the shield structure (2,3), and configured to electrically connect the first cable shield (413) and the second cable shield (423) to a first ground (E); and
a ground cable (43) connected to the ground terminal (96) and configured to electrically connect the first cable shield (413) and the second cable shield (423) to a second ground (C).

2. The connector (100) of claim 1, wherein the shield structure (2,3) comprises:
a shield shell base (2) surrounding at least a portion of the inner case (92); and
a shield shell body (3) connected to the shield shell base (2).

3. The connector (100) of claim 2, wherein
the shield shell base (2) comprises a base frame (21) and a base frame arm (21a) extending from the base frame (21), and
the shield shell body (3) comprises a body frame (31) and a plurality of body frame arms (31a) extending from the body frame (31) and connected to the base frame arm (21a).

4. The connector (100) of any preceding claim, wherein the outer case (91) comprises:
an outer case body (911) connected to the housing (93);
a first cable accommodating part (912) formed through the outer case body (911) and configured to accommodate the first cable (41);
a second cable accommodating part (913) formed to protrude from the outer case body (911) and configured to accommodate the second cable (42); and
a ground terminal accommodating part (914) formed through the outer case body (911) and configured to accommodate the ground terminal (96).

5. The connector (100) of claim 4, wherein a size of the second cable accommodating part (913) is greater than a size of the first cable accommodating part (912).

6. The connector (100) of claim 4 or 5, wherein the first cable accommodating part (912) and the second cable accommodating part (913) are each provided in plurality.

7. The connector (100) of claim 4, 5 or 6 wherein the ground terminal accommodating part (914) is provided between the first cable accommodating part (912) and the second cable accommodating part (913).

8. The connector (100) of any preceding claim, further comprising:
a first ferrule (51) configured to connect the first cable shield (413) and the shield structure (2,3).

9. The connector (100) of claim 8, wherein the shield structure (2,3) comprises a base frame (21) surrounding at least a portion of the inner case (92), and a base frame arm (21b) extending from the base frame (21) and connected to the first ferrule (51).

10. The connector (100) of claim 8 or 9, wherein the first ferrule (51) comprises:
a first inner ferrule (511) connected to the first cable shield (413); and
a first outer ferrule (512) surrounding the first inner ferrule (511) and connected to the shield structure (2,3) and the first cable shield (413).

11. The connector (100) of claim 10, wherein the first outer ferrule (512) comprises:
a first outer ferrule base (5121) with an inner surface connected to the first cable shield (413);
a first outer ferrule head (5123) with an outer surface connected to the shield structure (2,3) and an inner surface connected to the first inner cover (412); and
a first outer ferrule body (5122) configured to connect the first outer ferrule base (5121) and the first outer ferrule head (5123), and having an inclined surface.

12. The connector (100) of any preceding claim, further comprising:
a second ferrule (52) configured to connect the second cable shield (423) and the shield structure (2,3).

13. The connector (100) of claim 12, wherein the shield structure (2,3) comprises a base frame (21) surrounding at least a portion of the inner case (92), and a base frame arm (31c) extending from the base frame (21) and connected to the second ferrule (52).

14. The connector (100) of claim 12 or 13, wherein the second ferrule (52) comprises:
a second inner ferrule (521) connected to the second cable shield (423); and
a second outer ferrule (522) surrounding the second inner ferrule (521) and connected to the shield structure (2,3) and the second cable shield (423).

15. The connector (100) of claim 14, wherein the second outer ferrule (522) comprises:
a second outer ferrule base (5221) with an inner surface connected to the second cable shield (423);
a second outer ferrule head (5223) with an inner surface connected to the shield structure (2,3); and
a second outer ferrule body (5222) configured to connect the second outer ferrule base (5221) and the second outer ferrule head (5223), and having an inclined surface.

16. The connector (100) of any preceding claim, wherein the first ground (E) is an earth ground, and the second ground (C) is a chassis ground.

## Patentansprüche

1. Verbinder (100) mit einer Abschirmstruktur (2, 3), wobei der Verbinder (100) Folgendes umfasst:
ein Gehäuse (93);
eine mit dem Gehäuse (93) verbundene Außendose (91);
eine zwischen dem Gehäuse (93) und der Außendose (91) angeordnete Innendose (92);
wobei die Abschirmstruktur (2, 3) zumindest einen Teil der Innendose (92) umgibt;
ein erstes Kabel (41), das eine zum Führen von Wechselstrom konfigurierte erste Leitung (411), eine die erste Leitung (411) umgebende erste innere Abdeckung (412) und eine die erste innere Abdeckung (412) umgebende und mit der Abschirmstruktur (2, 3) verbundene erste Kabelabschirmung (413) umfasst;
ein zweites Kabel (42), das eine zum Führen von Gleichstrom konfigurierte zweite Leitung (421), eine die zweite Leitung (421) umgebende zweite innere Abdeckung (422) und eine die zweite innere Abdeckung (422) umgebende und mit der Abschirmstruktur (2, 3) verbundene zweite Kabelabschirmung (423) umfasst;
eine mit dem Gehäuse (93) verbundene Masseklemme (96) in Kontakt mit der Abschirmstruktur (2, 3), die zum elektrischen Verbinden der ersten Kabelabschirmung (413) und der zweiten Kabelabschirmung (423) mit einer ersten Masse (E) konfiguriert ist; und
ein mit der Masseklemme (96) verbundenes Massekabel (43), das zum elektrischen Verbinden der ersten Kabelabschirmung (413) und der zweiten Kabelabschirmung (423) mit einer zweiten Masse (C) konfiguriert ist.

2. Verbinder (100) nach Anspruch 1, wobei die Abschirmstruktur (2, 3) Folgendes umfasst:
eine Abschirmkapselbasis (2), die zumindest einen Teil der Innendose (92) umgibt; und
einen Abschirmkapselkörper (3), der mit der Abschirmkapselbasis (2) verbunden ist.

3. Verbinder (100) nach Anspruch 2, wobei
die Abschirmkapselbasis (2) einen Basisrahmen (21) und einen sich vom Basisrahmen (21) erstreckenden Basisrahmenarm (21a) umfasst, und
der Abschirmkapselkörper (3) einen Körperrahmen (31) und mehrere sich vom Körperrahmen (31) erstreckende und mit dem Basisrahmenarm (21a) verbundene Körperrahmenarme (31a) umfasst.

4. Verbinder (100) nach einem vorherigen Anspruch, wobei die Außendose (91) Folgendes umfasst:
einen mit dem Gehäuse (93) verbundenen Außendosenkörper (911);
einen ersten Kabelaufnahmeteil (912), der durch den Außendosenkörper (911) ausgebildet und zum Aufnehmen des ersten Kabels (41) konfiguriert ist;
einen zweiten Kabelaufnahmeteil (913), der so ausgebildet ist, dass er aus dem Außendosenkörper (911) herausragt, und der zum Aufnehmen des zweiten Kabels (42) konfiguriert ist; und
einen Masseklemmenaufnahmeteil (914), der durch den Außendosenkörper (911) ausgebildet und zum Aufnehmen der Masseklemme (96) konfiguriert ist.

5. Verbinder (100) nach Anspruch 4, wobei der zweite Kabelaufnahmeteil (913) größer ist als der erste Kabelaufnahmeteil (912).

6. Verbinder (100) nach Anspruch 4 oder 5, wobei der erste Kabelaufnahmeteil (912) und der zweite Kabalaufnahmeteil (913) jeweils mehrzahlig vorgesehen sind.

7. Verbinder (100) nach Anspruch 4, 5 oder 6, wobei der Masseklemmenaufnahmeteil (914) zwischen dem ersten Kabelaufnahmeteil (912) und dem zweiten Kabelaufnahmeteil (913) vorgesehen ist.

8. Verbinder (100) nach einem vorherigen Anspruch, der ferner Folgendes umfasst:
eine erste Hülse (51), die zum Verbinden der ersten Kabelabschirmung (413) und der Abschirmstruktur (2, 3) konfiguriert ist.

9. Verbinder (100) nach Anspruch 8, wobei die Abschirmstruktur (2, 3) einen zumindest einen Teil der Innendose (92) umgebenden Grundrahmen (21) und einen sich vom Grundrahmen (21) erstreckenden und mit der ersten Hülse (51) verbundenen Grundrahmenarm (21b) umfasst.

10. Verbinder (100) nach Anspruch 8 oder 9, wobei die erste Hülse (51) Folgendes umfasst:
eine mit der ersten Kabelabschirmung (413) verbundene erste Innenhülse (511); und
eine die erste Innenhülse (511) umgebende und mit der Abschirmstruktur (2, 3) sowie der ersten Kabelabschirmung (413) verbundene erste Außenhülse (512).

11. Verbinder (100) nach Anspruch 10, wobei die erste Außenhülse (512) Folgendes umfasst:
eine erste Außenhülsenbasis (5121) mit einer Innenfläche, die mit der ersten Kabelabschirmung (413) verbunden ist;
einen ersten Außenhülsenkopf (5123) mit einer mit der Abschirmstruktur (2, 3) verbundenen Außenfläche und einer mit der ersten inneren Abdeckung (412) verbundenen Innenfläche; und
einen ersten Außenhülsenkörper (5122), der zum Verbinden der ersten Außenhülsenbasis (5121) und des ersten Außenhülsenkopfs (5123) konfiguriert ist und eine geneigte Fläche aufweist.

12. Verbinder (100) nach einem vorherigen Anspruch, der ferner Folgendes umfasst:
eine zweite Hülse (52), die zum Verbinden der zweiten Kabelabschirmung (423) und der Abschirmstruktur (2, 3) konfiguriert ist.

13. Verbinder (100) nach Anspruch 12, wobei die Abschirmstruktur (2, 3) einen zumindest einen Teil der Innendose (92) umgebenden Grundrahmen (21) und einen sich vom Grundrahmen (21) erstreckenden und mit der zweiten Hülse (52) verbundenen Grundrahmenarm (31c) umfasst.

14. Verbinder (100) nach Anspruch 12 oder 13, wobei die zweite Hülse (52) Folgendes umfasst:
eine mit der zweiten Kabelabschirmung (423) verbundene zweite Innenhülse (521); und
eine die zweite Innenhülse (521) umgebende und mit der Abschirmstruktur (2, 3) sowie der zweiten Kabelabschirmung (423) verbundene zweite Außenhülse (522).

15. Verbinder (100) nach Anspruch 14, wobei die zweite Außenhülse (522) Folgendes umfasst:
eine zweite Außenhülsenbasis (5221) mit einer Innenfläche, die mit der zweiten Kabelabschirmung (423) verbunden ist;
einen zweiten Außenhülsenkopf (5223) mit einer Innenfläche, die mit der Abschirmstruktur (2, 3) verbunden ist; und
einen zweiten Außenhülsenkörper (5222), der zum Verbinden der zweiten Außenhülsenbasis (5221) und des zweiten Außenhülsenkopfs (5223) konfiguriert ist und eine geneigte Fläche aufweist.

16. Verbinder (100) nach einem vorherigen Anspruch, wobei die erste Masse (E) Erdmasse ist und die zweite Masse (C) Gehäusemasse ist.

## Revendications

1. Connecteur (100) ayant une structure de blindage (2, 3), le connecteur (100) comprenant :
un logement (93) ;
un boîtier externe (91) connecté au logement (93) ;
un boîtier interne (92) disposé entre le logement (93) et le boîtier externe (91) ;
la structure de blindage (2, 3) entourant au moins une portion du boîtier interne (92) ;
un premier câble (41) comprenant une première ligne (411) configurée pour transmettre du courant alternatif, un premier revêtement interne (412) entourant la première ligne (411), et un blindage de premier câble (413) entourant le premier revêtement interne (412) et connecté à la structure de blindage (2, 3) ;
un deuxième câble (42) comprenant une deuxième ligne (421) configurée pour transmettre du courant continu, un deuxième revêtement interne (422) entourant la deuxième ligne (421), et un blindage de deuxième câble (423) entourant le deuxième revêtement interne (422) et connecté à la structure de blindage (2, 3) ;
une borne de masse (96) connectée au logement (93), en contact avec la structure de blindage (2, 3), et configurée pour connecter électriquement le blindage de premier câble (413) et le blindage de deuxième câble (423) à une première masse (E) ; et
un câble de masse (43) connecté à la borne de masse (96) et configuré pour connecter électriquement le blindage de premier câble (413) et le blindage de deuxième câble (423) à une deuxième masse (C).

2. Connecteur (100) de la revendication 1, dans lequel la structure de blindage (2, 3) comprend :
une base d'enveloppe de blindage (2) entourant au moins une portion du boîtier interne (92) ; et
un corps d'enveloppe de blindage (3) connecté à la base d'enveloppe de blindage (2).

3. Connecteur (100) de la revendication 2, dans lequel
la base d'enveloppe de blindage (2) comprend un cadre de base (21) et un bras de cadre de base (21a) s'étendant à partir du cadre de base (21), et
le corps d'enveloppe de blindage (3) comprend un cadre de corps (31) et une pluralité de bras de cadre de corps (31a) s'étendant à partir du cadre de corps (31) et connecté au bras de cadre de base (21a).

4. Connecteur de n'importe quelle revendication précédente, dans lequel le boîtier externe (91) comprend :
un corps de boîtier externe (911) connecté au logement (93) ;
une partie de réception de premier câble (912) formée à travers le corps de boîtier externe (911) et configurée pour recevoir le premier câble (41) ;
une partie de réception de deuxième câble (913) formée pour faire saillie à partir du corps de boîtier externe (911) et configurée pour recevoir le deuxième câble (42) ; et
une partie de réception de borne de masse (914) formée à travers le corps de boîtier externe (911) et configurée pour recevoir la borne de masse (96).

5. Connecteur (100) de la revendication 4, dans lequel une taille de la partie de réception de deuxième câble (913) est plus grande qu'une taille de la partie de réception de premier câble (912).

6. Connecteur (100) de la revendication 4 ou 5, dans lequel la partie de réception de premier câble (912) et la partie de réception de deuxième câble (913) sont chacune prévues en pluralité.

7. Connecteur (100) de la revendication 4, 5 ou 6, dans lequel la partie de réception de borne de masse (914) est prévue entre la partie de réception de premier câble (912) et la partie de réception de deuxième câble (913).

8. Connecteur de n'importe quelle revendication précédente, comprenant en outre :
une première virole (51) configurée pour connecter le blindage de premier câble (413) et la structure de blindage (2, 3).

9. Connecteur (100) de la revendication 8, dans lequel la structure de blindage (2, 3) comprend un cadre de base (21) entourant au moins une portion du boîtier interne (92), et un bras de cadre de base (21b) s'étendant à partir du cadre de base (21) et connecté à la première virole (51).

10. Connecteur (100) de la revendication 8 ou 9, dans lequel la première virole (51) comprend :
une première virole interne (511) connectée au blindage de premier câble (413) ; et
une première virole externe (512) entourant la première virole interne (511) et connectée à la structure de blindage (2, 3) et au blindage de premier câble (413).

11. Connecteur (100) de la revendication 10, dans lequel la première virole externe (512) comprend :
une base de première virole externe (5121) avec une surface interne connectée au blindage de premier câble (413) ;
une tête de première virole externe (5123) avec une surface externe connectée à la structure de blindage (2, 3) et une surface interne connectée au premier revêtement interne (412) ; et
un corps de première virole externe (5122) configuré pour connecter la base de première virole externe (5121) et la tête de première virole externe (5123), et ayant une surface inclinée.

12. Connecteur de n'importe quelle revendication précédente, comprenant en outre :
une deuxième virole (52) configurée pour connecter le blindage de deuxième câble (423) et la structure de blindage (2, 3).

13. Connecteur (100) de la revendication 12, dans lequel la structure de blindage (2, 3) comprend un cadre de base (21) entourant au moins une portion du boîtier interne (92), et un bras de cadre de base (31c) s'étendant à partir du cadre de base (21) et connecté à la deuxième virole (52).

14. Connecteur (100) de la revendication 12 ou 13, dans lequel la deuxième virole (52) comprend :
une deuxième virole interne (521) connectée au blindage de deuxième câble (423) ; et
une deuxième virole externe (522) entourant la deuxième virole interne (521) et connectée à la structure de blindage (2, 3) et au blindage de deuxième câble (423).

15. Connecteur (100) de la revendication 14, dans lequel la deuxième virole externe (522) comprend :
une base de deuxième virole externe (5221) avec une surface interne connectée au blindage de deuxième câble (423) ;
une tête de deuxième virole externe (5223) avec une surface interne connectée à la structure de blindage (2, 3) ; et
un corps de deuxième virole externe (5222) configuré pour connecter la base de deuxième virole externe (5221) et la tête de deuxième virole externe (5223), et ayant une surface inclinée.

16. Connecteur de n'importe quelle revendication précédente, dans lequel la première masse (E) est une masse de terre, et la deuxième masse (C) est une masse de châssis.
